Europäisches Patentamt

European Patent Office

Office européen des brevets

(19)

(11) **EP 0 659 515 B1**

(12) **FASCICULE DE BREVET EUROPEEN**

(45) Date de publication et mention
de la délivrance du brevet:
**10.06.1998 Bulletin 1998/24**

(51) Int. Cl.⁶: **B23K 1/08**, H05K 3/34

(21) Numéro de dépôt: **94402786.1**

(22) Date de dépôt: **05.12.1994**

(54) **Dispositif et procédé d'injection de gaz pour la formation d'une atmosphère contrôlée dans un espace confiné**

Begasungsvorrichtung und -verfahren zur Erzeugung einer kontrollierten Atmosphäre in einem geschlossenen Raum

Gas injection device and process for forming a controlled atmosphere in a confined space

(84) Etats contractants désignés:
**BE DE DK ES GB IT NL PT SE**

(30) Priorité: **22.12.1993 FR 9315503**

(43) Date de publication de la demande:
**28.06.1995 Bulletin 1995/26**

(73) Titulaire:
**L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeur: **Leturmy, Marc**
**F-78890 Garanciere (FR)**

(74) Mandataire:
**Le Moenner, Gabriel et al
L'AIR LIQUIDE,
Service Relations Industrielles,
75, Quai d'Orsay
75321 Paris Cédex 07 (FR)**

(56) Documents cités:
**WO-A-92/10323        DE-A- 2 046 895
DE-A- 3 434 669        DE-C-  676 270
FR-A- 2 670 986        US-A- 5 203 489**

**Description**

La présente invention concerne un dispositif d'injection de gaz pour la formation d'une atmosphère contrôlée dans un espace confiné. Elle s'applique tout particulièrement aux cas où l'on souhaite mettre en place une atmosphère contrôlée (qu'elle soit inerte ou active) dans une ou plusieurs zones d'une machine de brasage à la vague ou encore dans tout ou partie d'un four continu utilisé pour des applications telles que brasage (dur ou tendre comme en électronique), ou encore recuits, revenus, frittages ou tous autres traitements thermiques ...

Si l'on considère l'exemple des machines de brasage à la vague, celles ci sont traditionnellement utilisées pour le brasage de composants sur circuits électroniques (qu'il s'agisse de composants insérés dans le circuit ou de composants montés en surface sur ce circuit), mais aussi pour l'étamage des terminaisons de composants électroniques ou encore pour le brasage de bandes de contacts sur supports électroniques tels que des circuits hybrides.

Ainsi, la conception de ces machines est telle, que les composants à braser ou à étamer sont amenés en contact avec une ou plusieurs vagues de soudure liquide obtenues par pompage du bain de soudure contenu dans un bac à travers une buse.

Au préalable, les circuits (sur lesquels ont été reportés les composants), ou les composants à étamer, ont généralement été fluxés dans une zone amont de la machine, de façon principalement à désoxyder les surfaces métalliques pour faciliter leur mouillage ultérieur par la soudure, l'opération de fluxage étant suivie d'une opération dite de préchauffage qui est pratiquée pour activer les flux précédemment déposés sur le circuit ou le composant, et pour préchauffer les circuits ou les composants avant leur arrivée dans la zone chaude de brasage. L'application d'un tel flux chimique donne lieu généralement à la nécessité pour l'utilisateur de pratiquer en sortie de machine, après brasage ou étamage, une opération de nettoyage des produits, souvent à l'aide de solvants chlorés, permettant d'éliminer les résidus de flux qui persistent sur le circuit ou le composant.

Ces machines sont traditionnellement ouvertes à l'atmosphère d'air ambiant.

Parmi les problèmes que rencontrent les utilisateurs de telles machines, on peut citer :

- la formation de couches d'oxyde (appelés scories) à la surface du bain de soudure du fait de son exposition à l'air, entraînant une perte de soudure non négligeable et la nécessité de régulièrement nettoyer le bain. Une machine de taille moyenne peut donner lieu à la formation de plus de 1 kg de scories par heure de fonctionnement;
- le second problème est lié à l'opération de nettoyage après brasage. En effet, dans le cadre du "protocole de Montréal", ces solvants font l'objet d'une réglementation très stricte, voire pour certains, selon les pays, d'une interdiction pure et simple.

On a proposé, pour donner une solution à ces problèmes de formation de scories, mais aussi de nettoyage, d'installer une couverture d'azote, au moins au dessus du bain de soudure, mais aussi parfois dans le reste de la machine, ceci en combinaison avec l'utilisation de flux de faible activité laissant un taux de résidus très faible sur les circuits, ce qui permet d'éliminer carrément l'opération de nettoyage ultérieure, la couverture protectrice d'azote au dessus du bain réduisant par ailleurs considérablement le phénomène d'oxydation de ce bain de soudure.

Ainsi, il est apparu important de pouvoir réaliser une injection de gaz permettant le meilleur compromis de performances et d'économie entre le niveau résiduel d'oxygène atteint au moins au dessus de la vague, le débit de gaz utilisé et le taux de production de la machine entraînant l'entrée et la sortie à un rythme déterminé des cartes, ces entrées/sorties de cartes étant bien évidemment source de pollution de l'atmosphère par entrées d'air.

On a ainsi vu apparaître des machines entièrement inertées, conçues dès le départ comme un tunnel étanche, mais aussi des systèmes de capotage permettant de mettre en place, sur des machines existantes classiques (ouvertes), une couverture d'azote au moins au niveau du bain de soudure mais aussi parfois sur une partie de la zone de préchauffage et sur la partie refroidissement en aval du bain.

Les performances annoncées de ces deux types de système ont montré que plus la couverture que l'on souhaitait mettre en place était restreinte (par exemple strictement limitée au bain de soudure), plus il était difficile de maintenir, dans le capotage, un niveau de débit d'azote raisonnable tout en obtenant des concentrations d'oxygène résiduel très basses (10 ppm d'oxygène résiduel ou moins par exemple). En effet, un système "court" par rapport à la longueur de la machine accommode plus difficilement les entrées d'air liées aux entrées/sorties de cartes, d'où la nécessité de maintenir un débit d'azote élevé.

On a ainsi vu apparaître pour certaines machines, des débits d'inertage de 50 ou 60 m$^3$/h d'azote, ce qui était souvent incompatible avec les impératifs (et le bilan) économiques de l'utilisateur.

Ces médiocres performances sont très clairement liées à une maîtrise imparfaite et non optimisée de la façon dont le gaz est injecté à l'intérieur des capotages.

Dans ce contexte, la demanderesse avait proposé, dans le document US-A-5161727, un dispositif d'inertage comportant un ensemble de capotages définissant, au moins à l'aplomb du bain de soudure, un espace intérieur séparé de l'atmosphère environnante par des moyens d'étanchéité, des canalisations d'injection du gaz débouchant dans les parties supérieures des capotages équipées de structures de diffuseur.

La présente invention a pour objet de proposer un dispositif amélioré d'injection de gaz, permettant par une conception simple et efficace d'obtenir un excellent compromis entre le débit de gaz injecté et la concentration d'oxygène résiduel atteinte, ceci tout en maintenant un rythme de production (donc un taux d'entrées/sorties des pièces) élevé de la machine ou du four continu considérés.

Pour ce faire, la demanderesse a mis en évidence l'importance, dans le but d'éviter les turbulences, sources d'entrées d'air dans la machine ou le four, de réaliser une injection de gaz se répartissant sur la plus grande surface possible de l'espace confiné considéré, avec une bonne homogénéisation des vitesses de gaz aux différents points du système (faible écart-type autour d'une vitesse moyenne), cette vitesse moyenne étant avantageusement maintenue faible pour éviter des turbulences.

Le dispositif d'injection de gaz pour la formation d'une atmosphère contrôlée dans un espace confiné selon l'invention, comprend alors au moins un ensemble de canalisations montées en série et/ou en parallèle, dont au moins une portion de canalisation comporte des orifices d'injection de gaz, le dit ensemble étant alimenté par au moins une conduite d'amenée de gaz, chaque conduite d'amenée étant connectée à l'ensemble au niveau d'un noeud primaire de connexion, le dimensionnement de l'ensemble respectant la relation suivante :

$$\Sigma\omega_i / \Sigma\varphi_i \geq 1, \text{ préférentiellement} \geq 1,5;$$

où $\Sigma\omega_i$ représente la somme des sections internes des conduites d'amenée de gaz qui alimentent l'ensemble et $\Sigma\varphi_i$ représente la somme des sections des orifices d'injection de gaz de l'ensemble de canalisations.

Par "espace confiné", on entend selon l'invention un espace délimité par exemple par un tunnel ou ensemble de capotages, isolant cet espace de l'atmosphère environnante mais traversé continûment par les pièces à traiter dans la machine ou le four continu considérés. L'invention s'applique donc tout particulièrement aux machines ou fours au défilé (machines de brasage à la vague, fours continus de brasage, fours continus de traitement thermique etc..).

Par "noeud", on entend, selon l'invention, aussi bien un simple point de raccordement qu'un dispositif adéquat (type capacité tampon), définissant un volume, dans lequel aboutit le gaz amené par la conduite, et d'où il repart vers le sous-ensemble de canalisations avec lequel il communique.

Par "canalisation" et "conduite", on entend, selon l'invention, tout type de canalisation de transport ou d'amenée de gaz, qu'elle soit rectiligne comme c'est le cas classiquement ou courbe, de section par exemple circulaire mais aussi carrée ou rectangulaire, dans des matériaux très variables selon le gaz envisagé (compatibilité chimique), par exemple en inox, en cuivre etc..Les "orifices d'injection de gaz" présents le cas échéant sur certaines de ces canalisations ou conduites d'amenée doivent alors s'entendre comme des trous permettant au gaz de s'échapper de la dite canalisation ou conduite, généralement transversalement à son sens de circulation dans la canalisation ou conduite (selon la forme des trous).

Dans le cas où le dispositif se réduit à une simple canalisation comportant des orifices, alimentée en gaz en une de ses extrémités, la relation $\Sigma\omega_i / \Sigma\varphi_i \geq 1$, prendra en compte un seul $\omega_i$ qui représente la section interne de la canalisation elle même et $\Sigma\varphi_i$ qui représente la somme des sections des orifices d'injection de la canalisation, le "noeud primaire" selon l'invention étant alors ici un point de raccordement "fictif" intermédiaire entre l'extrémité de la canalisation et la partie de la canalisation comportant des orifices.

Le gaz injecté pourra être aussi bien un gaz neutre (tel l'azote, l'argon ou encore l'hélium) quand il s'agit de mettre en place une atmosphère protectrice inerte, qu'un gaz actif tel que par exemple de l'hydrogène ou des mélanges gaz inerte/hydrogène, ou encore des mélanges gaz inerte/silane, quand on veut faire jouer à l'atmosphère un rôle tel que du décapage de surfaces, ou encore dans le cas des atmosphères en traitement thermique des mélanges à base de $H_2$ ou $CH_4$ ou $N_2O$ ou CO ou $CO_2$ ou encore par exemple $H_2O$.

Selon un des aspects de l'invention, au moins une des conduites d'amenée de gaz comporte elle même des orifices d'injection de gaz et le dimensionnement de l'ensemble suit alors la relation suivante :

$$\Sigma\omega_i / (\Sigma\varphi_i + \Sigma\alpha_i) \geq 1, \text{ préférentiellement} \geq 1,5,$$

où $\Sigma\omega_i$ représente la somme des sections internes des conduites d'amenée de gaz qui alimentent l'ensemble, $\Sigma\varphi_i$ représente la somme des sections des orifices d'injection de gaz de l'ensemble de canalisations et $\Sigma\alpha_i$ représente la somme des sections des orifices d'injection de la ou des conduites d'amenée considérées qui comportent des orifices d'injection de gaz.

Selon un autre aspect de l'invention, les conduites d'amenée de gaz sur l'ensemble proviennent toutes d'un noeud amont, lui même alimenté en gaz par une conduite d'alimentation de section interne $\Omega$, le dimensionnement de ce noeud amont étant tel que :

$$\Omega / \Sigma\omega_i \geq 1, \text{ préférentiellement} \geq 1,5,$$

où $\Sigma\omega_i$ représente la somme des sections internes des dites conduites d'amenée.

Dans une telle configuration, si une (ou plusieurs) des conduites d'amenée de gaz comporte elle même des orifices d'injection de gaz le dimensionnement de l'ensemble suit alors la relation suivante :

$\Omega / (\Sigma\varphi_i + \Sigma\alpha_i) \geq 1$, préférentiellement $\geq 1,5$,

où $\Sigma\varphi_i$ représente la somme des sections des orifices d'injection de gaz de l'ensemble de canalisations et $\Sigma\alpha_i$ représente la somme des sections des orifices d'injection de la ou des conduites d'amenée considérées qui comportent des orifices d'injection de gaz.

Selon une des mises en oeuvres de l'invention, pour chaque canalisation comportant des orifices d'injection de gaz, ces orifices sont dirigés vers la partie supérieure de l'espace confiné.

Selon une des mises en oeuvre de l'invention, les portions de canalisation de section carrée ou rectangulaire comportant des orifices d'injection de gaz sont constituées d'une partie inférieure non perforée en forme de U sur laquelle est montée une tôle perforée en forme de U renversé.

Selon un autre aspect de l'invention, le ou les dits ensembles constituant le dispositif sont inclus dans un capot, situé dans la partie supérieure de l'espace confiné, le capot comportant en sa partie inférieure une structure de diffuseur.

Selon une des mises en oeuvre de l'invention, le diffuseur est constitué d'une tôle perforée ou d'une plaque réalisée en un matériau poreux. Le pourcentage de vide de la tôle perforée (c'est à dire le rapport de la section totale des trous de la tôle sur la surface de la tôle) sera alors avantageusement inférieur à 40 % et préférentiellement inférieur à 20 %.

On utilisera avantageusement, pour réaliser la tôle perforée, un matériau résistant aux températures pratiquées dans l'espace confiné considéré, tel que par exemple de l'acier inoxydable, de l'Inconel etc.. Pour ce qui est du diffuseur en matière poreuse, on peut envisager par exemple des Inconel poreux mais aussi des matériaux céramiques.

L'invention concerne également un procédé d'injection de gaz pour la formation d'une atmosphère contrôlée dans un espace confiné selon lequel le gaz est injecté au travers d'un dispositif tel que celui précédemment défini et la vitesse du gaz, en sortie des orifices d'injection de gaz du ou des ensembles de canalisations, est supérieure à 0,5 m/s, préférentiellement supérieure à 1 m/s.

La demanderesse a en effet mis en évidence le fait que, pour obtenir la meilleure homogénéité possible du champs des vitesses en sortie de dispositif d'injection, il était avantageux, compte tenu d'un débit d'alimentation du dispositif fixé par les caractéristiques de l'espace confiné (et par le taux d'utilisation du four ou de la machine intégrant cet espace confiné), non seulement de dimensionner ce dispositif en appliquant les rapports de sections selon l'invention, mais aussi de réaliser ce dimensionnement de façon à obtenir, en sortie de dispositif, une vitesse de gaz faible mais au moins égale à une vitesse minimum limite, cette vitesse minimum variant pour chaque rapport de sections. Pour atteindre cette vitesse limite, on pourra par exemple, pour un rapport des sections donné (donc une surface d'orifices), réaliser cette surface d'orifices avec plus ou moins de trous. En l'occurrence, il sera avantageux, en vue de faire passer la vitesse au dessus de cette limite, de réaliser cette surface d'orifices en diminuant le nombre d'orifices d'injection.

Selon un autre aspect de l'invention, la vitesse du gaz, en sortie de chacun des orifices d'injection de gaz du ou des ensembles de canalisations, est située dans un intervalle autour d'une valeur moyenne déterminée, les bornes de cet intervalle n'étant pas éloignées de plus de 5 % de la valeur moyenne.

Selon un autre aspect de l'invention, le nombre de Reynolds du flux de gaz en sortie d'ensemble et/ou en sortie de diffuseur est inférieur ou égal à 2000, de façon a atteindre un régime d'écoulement aussi proche que possible du régime laminaire (le nombre de Reynolds s'évaluant par le rapport $V . D/v$, où $V$ représente la vitesse moyenne du gaz à la sortie d'un orifice d'injection, $D$ représente le diamètre intérieur de cet orifice et $v$ la viscosité cinématique du gaz considéré).

D'autres caractéristiques et avantages de la présente invention ressortiront de la description suivante de modes de réalisation donnés à titre illustratif mais nullement limitatif, faite en relation avec les dessins annexés, sur lesquels :

-   Les figures 1 à 9 illustrent schématiquement des exemples de dispositifs convenant pour la mise en oeuvre de l'invention.
-   La figure 10 donne une représentation schématique en section d'une canalisation de section carrée dont la partie supérieure est constituée par une tôle perforée en forme de U renversé.
-   La figure 11 donne une représentation schématique en perspective d'un dispositif selon l'invention, comportant un ensemble de canalisations disposé dans un capot dont la partie inférieure a une structure de diffuseur.

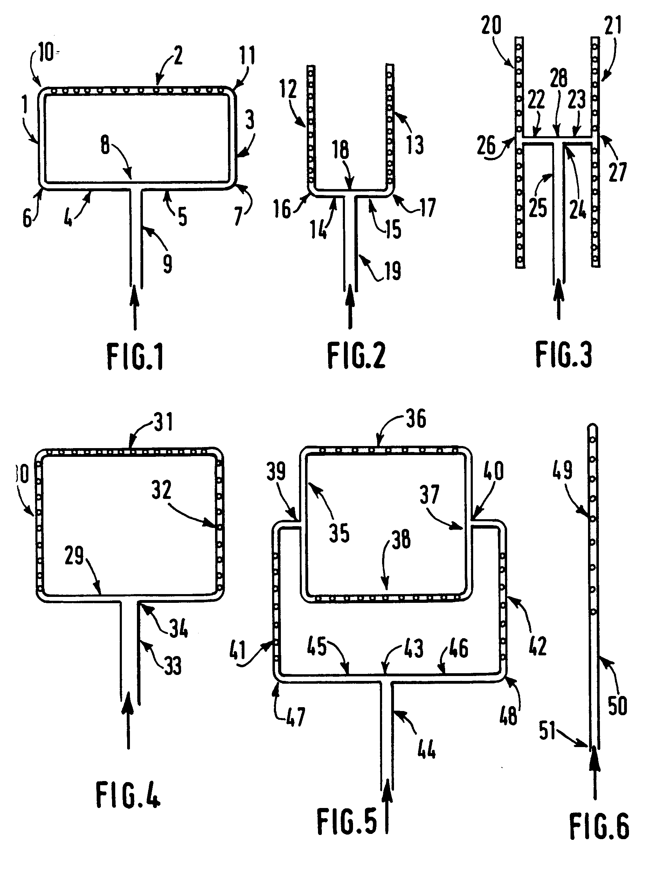

Les exemples de dispositifs des figures 1 à 9 ont été représentés schématiquement : pour des questions de facilité de représentation, les rapports de sections de canalisations et d'orifices d'injection n'ont pas été représentés à l'échelle, les orifices étant ainsi par exemple représentés sous la forme de simples points. Ces figures permettent néanmoins d'illustrer clairement les notions "d'ensemble", de "noeud primaire", de "noeud amont", de "canalisations à orifices d'injection" ou encore de "conduite d'amenée" selon l'invention.

L'exemple de la figure 1 illustre le cas d'un ensemble de 4 canalisations 1, 2, 3 et (4,5), alimenté par une seule conduite d'amenée 9 en un noeud primaire 8. On a alors, selon l'invention :

$$\omega_9 / \Sigma\varphi_i \geq 1;$$

où $\omega_9$ représente la section interne de la conduite d'amenée de gaz 9 qui alimente l'ensemble et $\Sigma\varphi_i$ représente la somme des sections des orifices d'injection de l'ensemble de canalisations, donc en l'occurrence de la canalisation 2.

On remarque que l'on pourrait aussi, selon l'invention, considérer l'ensemble de la figure 1 comme constitué de 3 canalisations 1, 2, 3 montées en série, l'ensemble étant alimenté par deux conduites d'amenée 4, 5, se raccordant à l'ensemble au niveau de deux noeuds primaires 6 et 7. On a alors, selon l'invention :

. $\omega_4 + \omega_5 / \Sigma\varphi_i \geq 1$ où $\omega_4$ représente la section interne de la conduite d'amenée 4, $\omega_5$ celle de la conduite d'amenée 5 et $\Sigma\varphi_i$ représente la somme des sections des orifices d'injection de l'ensemble de canalisations, donc ici, des orifices d'injection de la canalisation 2.

On peut aussi considérer dans ce cas sur cette figure la présence d'un noeud amont 8, où une conduite d'alimentation 9 de section interne $\Omega$ alimente les deux conduites d'amenée 4 et 5. On a alors à ce noeud amont :

. $\omega_4 + \omega_5 \leq \Omega$

Comme il apparaîtra clairement à l'homme du métier, le point important n'est pas tant la configuration dans laquelle on choisit de décrire un dispositif (qui peut comme illustré pour la figure 1 varier), mais d'appliquer pour la configuration choisie les règles de dimensionnement selon l'invention.

L'exemple illustré sur la figure 2 peut être décrit comme un ensemble de deux canalisations 12, 13 montées en parallèle, alimenté par deux conduite d'amenée 14 et 15 au niveau de deux noeuds primaires 16 et 17, les deux conduites d'amenée 14 et 15 étant elles mêmes alimentées au niveau d'un noeud amont 18 par une conduite d'alimentation 19 de section interne $\Omega$. On a alors pour cet ensemble ainsi décrit :

. $\omega_{14} + \omega_{15} / \Sigma\varphi_i \geq 1$ où $\omega_{14}$ représente la section interne de la conduite d'amenée 14, $\omega_{15}$ celle de la conduite d'amenée 15 et $\Sigma\varphi_i$ représente la somme des sections des orifices d'injection des canalisations 12 et 13.

On a aussi au niveau du noeud amont 18 : $\omega_{14} + \omega_{15} \leq \Omega$.

Comme pour la figure 1, l'ensemble de la figure 2 pourrait aussi être décrit selon une autre configuration, telle qu'un ensemble de 3 canalisations 12, 13 et (14,15) alimenté en un noeud primaire 18 par une conduite d'amenée 19. Encore une fois, quelle que soit la configuration adoptée, le point important est de respecter les règles de dimensionnement selon l'invention.

Ce principe étant adopté, les figures suivantes seront explicités en tenant compte d'une configuration.

Ainsi, pour l'exemple représenté sur la figure 3, l'ensemble comporte deux canalisations en parallèle 20 et 21, alimentées au niveau de deux noeuds primaires 26 et 27 par deux conduites d'amenée 22 et 23, elles mêmes alimentées en un noeud amont 24 par une conduite d'alimentation 25. Comme précédemment, l'ensemble pourrait aussi être décrit en considérant que les conduites 22 et 23 forment la canalisation 28 alimentée en le noeud primaire 24.

La figure 4 illustre le cas d'un ensemble constitué de quatre canalisations en série 29, 30, 31, 32, alimenté par une seule conduite d'amenée 33, au niveau d'un noeud primaire 34 situé sur la canalisation 29. La somme des sections des orifices est ici celle des orifices d'injection des canalisations 30, 31, et 32.

Dans l'exemple schématisé figure 5, l'ensemble est constitué d'une boucle de 4 canalisations 35, 36, 37, 38, alimenté au niveau de deux noeuds primaires 39, 40 par deux conduites d'amenée 41 et 42, s'étendant dans chaque cas du noeud primaire (39 ou 40) à un noeud amont 43 où aboutit une conduite d'alimentation 44 de section interne $\Omega$. On notera que les deux conduites 41 et 42 présentent, selon le mode de réalisation représenté, des orifices d'injection. Le dimensionnement du système suit alors les relations suivantes :

$$\Omega / (\Sigma\varphi_i + \Sigma\alpha_i) \geq 1,$$

où $\Sigma\varphi_i$ représente la somme des sections des orifices d'injection de l'ensemble de canalisations (donc des canalisations 36 et 38) et $\Sigma\alpha_i$ représente la somme des sections des orifices d'injection des conduites d'amenée qui comportent des orifices (donc des conduites d'amenée 41 et 42).

Comme il apparaîtra clairement à l'homme du métier, l'ensemble de la figure 5 pourrait être aussi décrit par exemple comme deux canalisations courbes alimenté en un noeud primaire 43 par une conduite d'amenée 44, la première étant formée des canalisations 35, 36, 37 et 38, et la seconde étant formée des canalisations 41, 42 et (45 , 46).

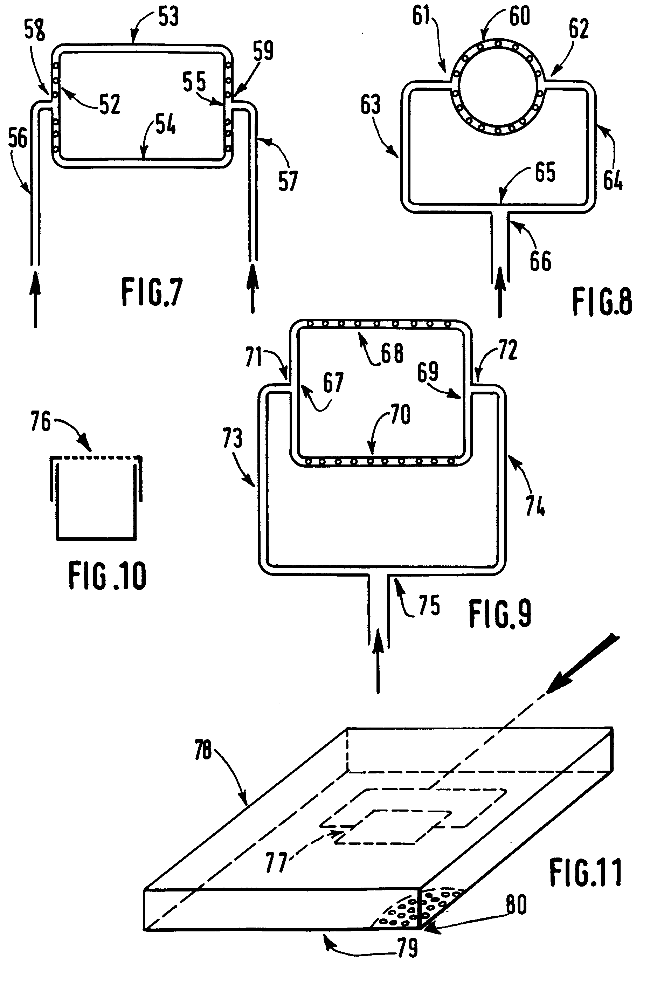

La figure 6 illustre quant à elle le cas simple d'une unique canalisation 49 comportant des orifices d'injection. Comme mentionné plus haut, l'application des règles de dimensionnement selon l'invention à ce cas conduit à la relation suivante : $\omega / \Sigma\varphi i \geq 1$, où $\omega$ représente la section interne de la canalisation 49 et $\Sigma\varphi_i$ représente la somme des sections des orifices d'injection de la canalisation, le "noeud primaire" 50 selon l'invention pouvant par exemple être représenté par un point de raccordement "fictif" intermédiaire entre l'extrémité non perforée 51 de la canalisation et la partie de la canalisation comportant des orifices d'injection.

On retrouve sur la figure 7 un exemple d'un ensemble de quatre canalisations 52, 53, 54, 55, l'ensemble étant alimenté au niveau de deux noeuds primaires 58, 59 par deux conduites d'amenée 56 et 57, cet exemple de dispositif ne comportant pas de noeud amont.

L'exemple de la figure 8 illustre le cas d'un ensemble courbe fermé 60 (par exemple torique) présentant sur le dessus des orifices d'injection, alimenté en deux noeuds primaires 61 et 62 par deux conduites d'amenée 63 et 64, s'étendant respectivement d'un noeud amont 65 au noeud primaire correspondant, les conduites d'amenée étant elle mêmes alimentées au niveau du noeud amont par une conduite d'alimentation 66. Le dimensionnement de l'ensemble va alors s'effectuer comme largement décrit jusqu'ici ($\Omega / (\Sigma\varphi_i) \geq 1$, où $\Sigma\varphi_i$ représente la somme des sections des orifices d'injection de l'ensemble de canalisations, donc de la boucle).

La figure 9 illustre le cas d'un dispositif proche de celui illustré en figure 5 mais où cette fois les deux conduites d'amenée de gaz 73, 74, raccordées à l'ensemble de canalisations (67, 68, 69, 70) au niveau des noeuds 71 et 72, ne sont pas munies d'orifices d'injection de gaz.

La figure 10 illustre de façon schématique la section d'une canalisation ou conduite présentant une section carrée (ou rectangulaire) pour laquelle l'injection se fait par l'intermédiaire d'une tôle perforée 76 en forme de U renversé, présente sur le dessus de la canalisation ou conduite. Comme déjà signalé, l'évaluation de la somme des sections des orifices d'injection se ferait alors par la somme des trous de la portion de tôle composant cette canalisation.

Sur la figure 11, est schématisé un dispositif d'injection convenant pour la mise en oeuvre de l'invention, constitué par un ensemble 77 de canalisations tel que celui représenté sur la figure 9 (simplement schématisé sous la forme d'un trait tireté), inclus dans un capot 78 dont la partie inférieure 79 est constituée par une structure de diffuseur partiellement schématisée au coin 80 du capot.

Un dispositif tel que celui représenté en relation avec la figure 6 a été testé pour un <u>premier exemple</u> de mise en oeuvre, dans les conditions suivantes : la canalisation a un diamètre intérieur de 10 mm, et comporte 7 trous circulaires de diamètre 2 mm, régulièrement espacés de 50 mm. Cette canalisation est alimentée par un débit de gaz (en l'occurrence de l'azote) de 0,27 Nm$^3$/h. En régime établi, on a effectué des mesures de vitesse d'éjection de gaz au niveau de chaque trou, en plaçant un anémomètre à 40 mm au dessus du trou.

On avait donc pour cette configuration :

.   $\omega$ (section de la canalisation) = 0,78 cm$^2$
.   $\Sigma\varphi_i$ (somme des sections des trous) = 0,22 cm$^2$,

d'où un rapport $\omega / \Sigma\varphi i = 3,5$ donc bien supérieur à 1, d'ailleurs bien supérieur à 1,5.

Les résultats obtenus dans ces conditions ont montré une excellente homogénéité des vitesses de gaz en sortie des trous avec une valeur moyenne de la vitesse égale à 4,30 m/s, et un faible écart-type pour l'ensemble des trous autour de cette valeur moyenne égal à 0,16 m/s.

Le même test a été pratiqué avec un débit de 0,20 Nm$^3$/h : on obtient alors une valeur moyenne de la vitesse de 3,04 m/s et un faible écart type des valeur autour de cette valeur moyenne égal à 0,06 m/s.

Donc dans les deux cas, on constate une très faible dispersion.

Ce même type de dispositif de la figure 6 a été, dans un <u>second exemple,</u> comparatif, mis en oeuvre dans la configuration suivante : la canalisation toujours de diamètre intérieur 10 mm, était ici encore percée de 7 trous, mais de diamètre 5,3 mm, régulièrement espacés de 50 mm.

Dans cette configuration :

.   $\omega$ (section de la canalisation) = 0,78 cm$^2$
.   $\Sigma\varphi_i$ (somme des sections des trous) = 1,54 cm$^2$,

d'où un rapport $\omega / \Sigma\varphi i = 0,5$ donc inférieur à 1.

Avec la même procédure que celle explicitée dans le cadre du premier exemple, un premier débit de 0,26 Nm$^3$/h a été utilisé. Pour cette première valeur du débit, les résultats obtenus montrent une valeur moyenne de la vitesse du gaz en sortie des 7 trous de 0,75 m/s, avec un écart type autour de cette valeur de 0,13 m/s (donc près de 18 % de la valeur moyenne) ce qui représente une dispersion notable.

L'application d'un débit de 0,2 Nm$^3$/h a montré aussi des résultats médiocres puisqu'une valeur moyenne de la vitesse du gaz a été mesurée à 0,50 m/s avec un écart type de 0,12 m/s, d'où une dispersion de près de 24 %.

Ces résultats médiocres sont à relier à la valeur du rapport des sections.

Les deux exemples qui suivent (<u>troisième et quatrième exemple</u>), ont été mis en oeuvre pour illustrer le problème de la vitesse minimum qu'il est avantageux de respecter en sortie d'ensemble . Comme illustré à l'aide des exemples précédents, le respect des règles de dimensionnement de l'ensemble selon l'invention apporte une amélioration significative en terme d'homogénéisation du champs de vitesses à la sortie de l'ensemble de canalisations. Cependant, dans le calcul de ce dimensionnement, il est avantageux de réaliser ce rapport de section de façon à obtenir une vitesse minimum en sortie des orifices d'injection, ceci en jouant, pour un rapport de sections donné, donc pour une surface de trous donnée, sur le nombre de trous permettant d'atteindre cette surface, une réduction du nombre de trous (la surface de chaque trou devant être légèrement augmentée pour maintenir constant le rapport) entraînant une augmentation de vitesse.

Pour simuler de façon simple ce problème, nous avons testé les deux situations suivantes :

-   <u>Exemple No 3</u> : la canalisation toujours de diamètre intérieur 10 mm, est ici percée de 5 trous, mais de diamètre 3,3 mm, régulièrement espacés de 50 mm.

Dans cette configuration :

. $\omega$ (section de la canalisation) = 0,78 cm$^2$
. $\Sigma\varphi_i$ (somme des sections des trous) = 0,43 cm$^2$,

d'où un rapport $\omega / \Sigma\varphi_i$ = 1.80 donc supérieur à 1.

Un débit de 0,066 Nm$^3$/h d'azote a été appliqué à l'entrée de la canalisation, donnant lieu à une vitesse moyenne du gaz à la sortie des trous de 0,45 m/s, avec un écart type autour de cette valeur de 0,03 m/s, d'où une dispersion d'environ 7%.

- Exemple No 4 : on utilise la même canalisation que celle de l'exemple 3 mais en augmentant le débit à l'entrée de la canalisation à 0,264 Nm$^3$/h d'azote . Les résultats obtenus ont montré une vitesse moyenne du gaz à la sortie des trous de 2,41 m/s, avec un écart type autour de cette valeur de 0,04 m/s, d'où une dispersion de moins de 2 % par rapport à la valeur moyenne.

Les nombreuses expérimentations effectuées par la demanderesse (en faisant varier : rapport de sections aux noeuds primaires, vitesse du gaz en sortie en jouant sur le débit d'entrée ou enjouant sur le nombre de trous) ont clairement démontré que cette vitesse limite varie selon le rapport de sections considéré.

Pour un cinquième exemple de mise en oeuvre de l'invention, un dispositif tel que celui représenté en relation avec la figure 11 (mettant en oeuvre un ensemble de canalisations tel que celui de la figure 9 dans un capotage), a été testé pour l'inertage de la zone de brasage d'une machine de brasage à la vague.

Un tel capotage est installé au dessus de la zone de préchauffage, mais aussi de la zone de brasage, et d'une partie de la zone de refroidissement de la machine. Chaque capotage est muni d'un ensemble de canalisations tel que celui de la figure 9.

Chaque ensemble de canalisations respecte un rapport de sections de 2,8 (entre conduite d'alimentation et somme des sections des orifices d'injection). Le diffuseur au niveau de la partie inférieure de chaque capotage est assuré par une grille dont le pourcentage de vide est de 38 %.

Un tel dispositif, alimenté en azote par un débit global (pour les trois zones) de 24 Nm$^3$/h a permis de maintenir le taux d'oxygène au dessus du bain de soudure en permanence à moins de 10 ppm, ceci quelque soit le rythme de production de la machine (comme par exemple des circuits disposés sur le convoyeur tous les 5 cm et défilant à une vitesse de 1,3 m/mn). Cet exemple de mise en oeuvre montre que pour un débit global particulièrement réduit (et de ce fait raisonnable), il a été possible, par un respect des règles de dimensionnement aux différents points du dispositif, de mettre en place une atmosphère stable dans la machine, répartie aussi uniformément que possible dans chacune des zones couvertes par un capotage, avec un champ de vitesse permettant de réduire au minimum les turbulences et donc les entrées d'air lors des entrées/sorties de cartes dans la machine.

Une telle couverture d'azote dans la machine a permis de réduire de façon très significative la formation des scories au dessus du bain de soudure (moins de 30 g de scories par heure de fonctionnement de la machine sous couverture d'azote contre plus de 1 kg par heure en fonctionnement classique sous air) mais aussi de permettre son fonctionnement en combinaison avec des flux dits "très faible extrait sec" (laissant un minimum de résidus de flux après brasage) permettant à l'utilisateur de la machine d'atteindre des conditions de non nettoyage de ses circuits après brasage.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art dans le cadre des revendications ci-après.

**Revendications**

1. Dispositif d'injection de gaz pour la formation d'une atmosphère contrôlée dans un espace confiné, comprenant au moins un ensemble de canalisations montées en série et/ou en parallèle, dont au moins une portion (2, 12, 13) de canalisation comporte des orifices d'injection de gaz, le dit ensemble étant alimenté par au moins une conduite d'amenée de gaz (9, 14, 15), chaque conduite étant connectée à l'ensemble au niveau d'un noeud primaire (8, 16, 17) de connexion, le dimensionnement de l'ensemble respectant la relation suivante :

   $\Sigma\omega_i / \Sigma\varphi_i \geq 1$, préférentiellement $\geq 1,5$;

   où $\Sigma\omega_i$ représente la somme des sections internes des conduites d'amenée de gaz qui alimentent l'ensemble et $\Sigma\varphi_i$ représente la somme des sections des orifices d'injection de gaz de l'ensemble de canalisations.

2. Dispositif selon la revendication 1, caractérisé en ce que les conduites d'amenée de gaz (14, 15) sur l'ensemble proviennent toutes d'un noeud amont (18), lui même alimenté en gaz par une conduite d'alimentation (19) de section interne $\Omega$, le dimensionnement de ce noeud amont étant tel que :

   $\Omega / \Sigma\omega_i \geq 1$, préférentiellement $\geq 1,5$ ,

   où $\Sigma\omega_i$ représente la somme des sections internes des dites conduites d'amenée.

3. Dispositif selon la revendication 1, caractérisé en ce que au moins une des dites conduites d'amenée de gaz comporte elle même des orifices d'injection de gaz et en ce que le dimensionnement de l'ensemble suit alors la relation suivante :

$$\Sigma\omega_i / (\Sigma\varphi_i + \Sigma\alpha_i) \geq 1,\ \text{préférentiellement} \geq 1,5\ ;$$

où $\Sigma\omega_i$ représente la somme des sections internes des dites conduites d'amenée de gaz qui alimentent l'ensemble, $\Sigma\varphi_i$ représente la somme des sections des orifices d'injection de gaz de l'ensemble de canalisations et $\Sigma\alpha_i$ représente la somme des sections des orifices d'injection de la conduite considérée qui comporte des orifices d'injection de gaz.

4. Dispositif selon la revendication 2, caractérisé en ce que au moins une des conduites d'amenée de gaz (41, 42) comporte elle même des orifices d'injection de gaz et en ce que le dimensionnement de l'ensemble suit alors la relation suivante :

$$\Omega / (\Sigma\varphi_i + \Sigma\alpha_i) \geq 1,\ \text{préférentiellement} \geq 1,5\ ;$$

où $\Sigma\varphi_i$ représente la somme des sections des orifices d'injection de gaz de l'ensemble de canalisations , $\Sigma\alpha_i$ représente la somme des sections des orifices d'injection de la conduite d'amenée considérée qui comporte des orifices-d'injection de gaz et $\Omega$ la section interne de la dite conduite d'alimentation.

5. Dispositif selon l'une des revendications 1 à 4, caractérisé en ce que chaque canalisation est un tube de section circulaire.

6. Dispositif selon l'une des revendications 1 à 4, caractérisé en ce que au moins une des portions de canalisation est un tube de section carrée ou rectangulaire.

7. Dispositif selon la revendication 6, caractérisé en ce que les portions de canalisation de section carrée ou rectangulaire comportant des orifices d'injection de gaz sont constituées d'une partie inférieure non perforée en forme de U sur laquelle est montée une tôle perforée (76) en forme de U renversé.

8. Dispositif selon l'une des revendications 1 à 7, caractérisé en ce que pour chaque canalisation comportant des orifices d'injection de gaz, ces orifices sont dirigés vers la partie supérieure de l'espace confiné.

9. Dispositif selon l'une des revendications 1 à 8 caractérisé en ce que le ou les dits ensembles sont inclus dans un capot (78), situé dans la partie supérieure de l'espace confiné, le capot comportant en sa partie inférieure (79) un diffuseur.

10. Dispositif selon la revendication 9, caractérisé en ce que le diffuseur est constitué d'une tôle perforée.

11. Dispositif selon la revendication 10, caractérisé en ce que le pourcentage de vide de la tôle perforée est inférieur à 40 %, préférentiellement inférieur à 20 %.

12. Dispositif selon la revendication 9, caractérisé en ce que le diffuseur est constitué d'une plaque réalisée en un matériau poreux.

13. Procédé d'injection de gaz pour la formation d'une atmosphère contrôlée dans un espace confiné, caractérisé en ce que le gaz est injecté au travers d'un dispositif tel que revendiqué selon l'une des revendications 1 à 12, et en ce que la vitesse du gaz, en sortie des orifices d'injection de gaz du ou des ensembles de canalisation est supérieure à 0,5 m/s, préférentiellement supérieure à 1 m/s.

14. Procédé selon la revendication 13, caractérisé en ce que la vitesse du gaz, en sortie de chacun des orifices d'injection de gaz du ou des ensembles de canalisations, est située dans un intervalle autour d'une valeur moyenne déterminée, les bornes de cet intervalle n'étant pas éloignées de plus de 5 % de la valeur moyenne.

15. Procédé selon l'une des revendications 13 ou 14, caractérisé en ce que le nombre de Reynolds du flux de gaz en sortie d'ensemble et/ou en sortie de diffuseur est inférieur à 2000.

**Claims**

1. Gas injection device for forming a controlled atmosphere in a confined space, comprising at least one assembly of pipelines mounted in series and/or in parallel, of which at least one portion (2, 12, 13) of the pipeline has gas injection orifices, the said assembly being fed by at least one gas supply pipe (9, 14, 15), each pipe being connected to the assembly at a primary connecting node (8, 16, 17), the dimensions of the assembly complying with the following relationship :

$$\Sigma\omega_i/\Sigma\varphi_i \geq 1,\ \text{preferably} \geq 1.5;$$

where $\Sigma\omega_i$ represents the sum of the internal cross sections of the gas supply pipes which feed the assembly and $\Sigma\varphi_i$ represents the sum of the cross sections of the gas injection orifices of the assemblies of pipelines.

2. Device according to claim 1, characterized in that the gas supply pipes (14, 15) on the assembly all originate from an upstream node (18), itself fed with gas by a feed pipe (19) having an internal cross section $\Omega$, the dimensions of this upstream node being such that :

$$\Omega/\Sigma\omega_i \geq 1, \text{ preferably} \geq 1.5;$$

where $\Sigma\omega_i$ represents the sum of the internal cross sections of the said supply pipes.

3. Device according to claim 1, characterized in that at least one of the said gas supply pipes has itself gas injection orifices and in that the dimensions of the assembly then follow the following relationship :

$$\Sigma\omega_i/(\Sigma\varphi_i + \Sigma\alpha_i) \geq 1, \text{ preferably} \geq 1.5,$$

where $\Sigma\omega_i$ represents the sum of the internal cross sections of the said gas supply pipes which feed the assembly, $\Sigma\varphi_i$ represents the sum of the cross sections of the gas injection orifices of the assembly of pipelines and $\Sigma\alpha_i$ represents the sum of the cross sections of the injection orifices of the pipe considered which has gas injection orifices.

4. Device according to claim 2, characterized in that at least one of the gas supply pipes (41, 42) itself has gas injection orifices and in that the dimensions of the assembly then follow the following relationship :

$$\Omega/(\Sigma\varphi_i + \Sigma\alpha_i) \geq 1, \text{ preferably} \geq 1.5,$$

where $\Sigma\varphi_i$ represents the sum of the cross sections of the gas injection orifices of the assembly of pipelines, $\Sigma\alpha_i$ represents the sum of the cross sections of the injection orifices of the supply pipe considered which has gas injection orifices, and $\Omega$ is the internal cross section of the said supply pipe.

5. Device according to one of claims 1 to 4, characterized in that each pipeline is a tube with a circular cross section.

6. Device according to one of claims 1 to 4, characterized in that at least one of the portions of the pipeline is a tube with a square or rectangular cross section.

7. Device according to claim 6, characterized in that the portions of the pipeline with a square or rectangular cross section having gas injection orifices consist of an U-shaped unperforated lower part on which is mounted a perforated metal sheet (76) in the form of an inverted U.

8. Device according to one of claims 1 to 7, characterized in that for each pipeline having gas injection orifices, these orifices are directed towards the upper part of the confined space.

9. Device according to one of claims 1 to 8, characterized in that the said assembly or assemblies is/are included within a hood (78), situated in the upper part of the confined space, the hood including a diffuser in its upper part (79).

10. Device according to claim 9, characterized in that the diffuser consists of a perforated metal sheet.

11. Device according to claim 10, characterized in that the percentage of voids in the perforated metal sheet is less than 40 %, preferably less than 20 %.

12. Device according to claim 9, characterized in that the diffuser consists of a plate made of a porous material.

13. Process for injecting gas for forming a controlled atmosphere in a confined space, characterized in that the gas is injected through a device such as claimed in one of claims 1 to 12, and in that the speed of the gas leaving the gas injection orifices of the assembly or assemblies of pipelines is greater than 0.5 m/s, preferably greater than 1 m/s.

14. Process according to claim 13, characterized in that the speed of the gas leaving each of the gas injection orifices of the assembly or assemblies of pipelines is situated within an interval about a given mean value, the boundaries of this interval being separated by no more than 5 % from the mean value.

15. Process according to either of claims 13 or 14, characterized in that the Reynolds number of the gas stream leaving the assembly and/or leaving the diffuser is less than 2000.

**Patentansprüche**

1. Vorrichtung zur Begasung zwecks Erzeugung einer kontrollierten Atmosphäre in einem geschlossenen Raum, die wenigstens eine Gruppe von in Serie und/oder parallel montierten Rohrsträngen umfaßt, von denen wenigstens ein Teil (2, 12, 13) des Rohrstrangs Begasungsöffnungen aufweist, wobei die Gruppe durch wenigstens eine Gaszuführungsleitung (9, 14, 15) versorgt wird, jede Leitung mit der Gruppe in Höhe eines primären Verteileranschlusses (8, 16, 17) verbunden ist und die Dimensionierung der Gruppe die folgende Beziehung einhält:

$$\Sigma\omega_i/\Sigma\varphi_i \geq 1, \text{ bevorzugt} \geq 1,5,$$

worin $\Sigma\omega_i$ die Summe der inneren Querschnitte der Gaszuführungsleitungen, die die Gruppe versorgen, bedeutet und $\Sigma\varphi_i$ die Summe der Querschnitte der Begasungsöffnungen der Rohrstrang-Gruppe bedeutet.

2. Vorrichtung nach Anspruch 1, dadurch gekennzeichnet, daß alle Gaszuführungsleitungen (14, 15) zur Gruppe von einem stromaufwärtigen Verteiler (18) kommen, der selbst über eine Versorgungsleitung (19) des inneren Querschnitts $\Omega$ mit Gas versorgt wird, wobei die Dimensionierung dieses stromaufwärtigen Verteilers ist:

$$\Omega/\Sigma\omega_i \geq 1, \text{ bevorzugt } \geq 1,5,$$

worin $\Sigma\omega_i$ die Summe der inneren Querschnitte der Zuführungsleitungen bedeutet.

3. Vorrichtung nach Anspruch 1, dadurch gekennzeichnet, daß wenigstens eine der Gaszuführungsleitungen selbst Begasungsöffnungen aufweist und daß die Dimensionierung der Gruppe dann der folgenden Beziehung folgt:

$$\Sigma\omega_i(\Sigma\varphi_i+\Sigma\alpha_i) \geq 1, \text{ bevorzugt } \geq 1,5,$$

worin $\Sigma\omega_i$ die Summe der inneren Querschnitte der Gaszuführungsleitungen, die die Gruppe versorgen, bedeutet, $\Sigma\varphi_i$ die Summe der Querschnitte der Begasungsöffnungen der Rohrstrang-Gruppe bedeutet und $\Sigma\alpha_i$ die Summe der Querschnitte der Begasungsöffnungen der in Betracht gezogenen Leitung, die Begasungsöffnungen aufweist, bedeutet.

4. Vorrichtung nach Anspruch 2, dadurch gekennzeichnet, daß wenigstens eine der Gaszuführungsleitungen (41, 42) selbst Begasungsöffnungen aufweist und daß die Dimensionierung der Gruppe dann der folgenden Beziehung folgt:

$$\Omega/(\Sigma\varphi_i+\Sigma\alpha_i) \geq 1, \text{ bevorzugt } \geq 1,5,$$

worin $\Sigma\varphi_i$ die Summe der Querschnitte der Begasungsöffnungen der Rohrstrang-Gruppe bedeutet, $\Sigma\alpha_i$ die Summe der Querschnitte der Begasungsöffnungen der in Betracht gezogenen Zuführungsleitung, die Begasungsöffnungen aufweist, bedeutet und $\Omega$ den inneren Querschnitt der Versorgungsleitung bedeutet.

5. Vorrichtung nach einem der Ansprüche 1 bis 4, dadurch gekennzeichnet, daß jeder Rohrstrang eine Röhre mit rundem Querschnitt ist.

6. Vorrichtung nach einem der Ansprüche 1 bis 4, dadurch gekennzeichnet, daß wenigstens einer der Rohrstrang-Abschnitte eine Röhre von quadratischem oder rechteckigem Querschnitt ist.

7. Vorrichtung nach Anspruch 6, dadurch gekennzeichnet, daß die Rohrstrang-Abschnitte mit quadratischem oder rechteckigem Querschnitt, die Begasungsöffnungen aufweisen, aus einem unteren, nicht perforierten Teil in Form eines U gebildet werden, auf dem ein perforiertes Blech (76) in Form eines umgekehrten U montiert ist.

8. Vorrichtung nach einem der Ansprüche 1 bis 7, dadurch gekennzeichnet, daß bei jedem Begasungsöffnungen aufweisenden Rohrstrang diese Begasungsöffnungen zum oberen Teil des geschlossenen Raums hin ausgerichtet sind.

9. Vorrichtung nach einem der Ansprüche 1 bis 8, dadurch gekennzeichnet, daß die Gruppe oder die Gruppen von einer Abdeckhaube (78) umschlossen sind, die sich im oberen Teil des geschlossenen Raums befindet, wobei die Abdeckhaube an ihrem unteren Teil (79) einen Diffusor aufweist.

10. Vorrichtung nach Anspruch 9, dadurch gekennzeichnet, daß der Diffusor aus einem perforierten Blech gebildet wird.

11. Vorrichtung nach Anspruch 10, dadurch gekennzeichnet, daß der prozentuale Anteil der Hohlstellen des perforierten Bleches unterhalb 40%, bevorzugt unterhalb 20% liegt.

12. Vorrichtung nach Anspruch 9, dadurch gekennzeichnet, daß der Diffusor aus einer aus einem porösen Material hergestellten Platte gebildet wird.

13. Verfahren zur Begasung zwecks Erzeugung einer kontrollierten Atmosphäre in einem geschlossenen Raum, dadurch gekennzeichnet, daß das Gas durch eine solche Vorrichtung, wie sie gemäß einem der Ansprüche 1 bis 12 beansprucht wird, hindurch eingespeist wird, und dadurch, daß die Gasgeschwindigkeit am Austritt der Begasungsöffnungen der Rohrstrang-Gruppe oder -Gruppen höher als 0,5 m/s, bevorzugt oberhalb 1 m/s ist.

14. Verfahren nach Anspruch 13, dadurch gekennzeichnet, daß die Gasgeschwindigkeit am Austritt jeder der Begasungsöffnungen der Rohrstrang-Gruppe oder -Gruppen in einem Intervall um einen bestimmten Mittelwert liegt, wobei die Grenzen dieses Intervalls um nicht mehr als 5% vom Mittelwert entfernt sind.

15. Verfahren nach einem der Ansprüche 13 oder 14, dadurch gekennzeichnet, daß die Reynolds-Zahl des Gasstroms am Austritt der Gruppe und/oder am Austritt des Diffusors unterhalb 2000 liegt.

FIG.1

FIG.2

FIG.3

FIG.4

FIG.5

FIG.6

**FIG.7**

**FIG.8**

**FIG.10**

**FIG.9**

**FIG.11**